# EUROPÄISCHE PATENTSCHRIFT

(11) **EP 0 308 697 B1**
(45) Veröffentlichungstag und Bekanntmachung des Hinweises auf die Patenterteilung: **10.03.1993**
(21) Anmeldenummer: 88114174.1
(22) Anmeldetag: 31.08.1988
(51) Int. Cl.: H02G 3/22, F16L 5/02

(54) **Mauerdurchführung für Leitungen**
Wall feed-through for conduits
Traversée de mur pour conduits

(30) Priorität: 19.09.1987 DE 3731583
(43) Veröffentlichungstag der Anmeldung: 29.03.1989
(73) Patentinhaber: Hauff-Technik GmbH & Co. KG, D-89542 Herbrechtingen (DE)
(72) Erfinder: Hauff, Werner, D-7925 Ballmertshofen (DE)
(74) Vertreter: Fay, Hermann, Dipl.-Phys. Dr.

(56) Entgegenhaltungen:
- DE-A- 2 901 266
- DE-B- 1 196 447
- DE-U- 8 406 807
- US-A- 4 002 345

## Beschreibung

Die Erfindung betrifft eine Mauerdurchführung für Leitungen, wie Kabel, Rohre oder dergl., zum Einsetzen in einen in der Mauer insbesondere als Bohrung geschaffenen Mauerdurchbruch, mit einem den Mauerdurchbruch durchgreifenden Futterrohr, einer Packung zum Ausfüllen des Ringraumes zwischen dem Futterrohr und der Wandung des Mauerdurchbruchs und mit zwei außen auf dem Futterrohr sitzenden Flanschen, von denen der zur Abdichtung gegen die Außenseite der Mauer eingerichtete eine Flansch eine den Querschnitt des Mauerdurchbruchs überall radial übergreifende Größe besitzt und auf dem Futterrohr längsverschiebbar angeordnet und an einer Spannmutter abgestützt ist, die in einem auf dem Futterrohr vorgesehenen, vom Rohrende ausgehenden Außengewinde verschraubbar ist, und der andere Flansch zum axialen Verpressen der Packung innerhalb des Mauerdurchbruchs zumindest über einen Teil der Durchbruchslänge verschiebbar und gegen den axialen Druck der Packung am Futterrohr abgestützt ist.

Bei einer aus der DE-PS 29 01 266 bekannten Mauerdurchführung dieser Art besteht die Packung aus einer zumindest während der Montage der Mauerdurchführung plastisch verformbaren Dichtungsmasse. Zur Montage wird die vorbereitete Mauerdurchführung bis zur Anlage des spannmutterseitigen Flansches an der Maueraußenseite in den Mauerdurchbruch eingeführt und die Spannmutter angezogen, wodurch sich das Futterrohr und der im Mauerdurchbruch liegende, am Futterrohr feste Flansch verschieben. Dadurch wird die Packung axial gestaucht, so daß die Dichtungsmasse den Ringraum zwischen den Flanschen vollständig ausfüllt und abdichtet. Derartige Mauerdurchführungen haben sich bei Betonmauern bewährt, bereiten aber bei Mauern aus Hohlblocksteinen, Lochsteinen, Gasbetonsteinen, Gitterziegeln oder dergl. Probleme, weil die im Inneren solcher Steine zahlreich vorhandenen Hohlräume von dem Mauerdurchbruch angeschnitten werden und beim Verpressen der Packung so große Mengen der Dichtungsmasse aufnehmen können, daß nicht nur die Dichtwirkung verloren geht, sondern auch der Sitz des Futterrohres im Mauerdurchbruch nicht mehr fest genug ist, damit der der Maueraußenseite anliegende Flansch noch mit ausreichendem Dichtungsdruck gegen die Mauer verpreßt werden könnte.

Der Erfindung liegt die Aufgabe zugrunde, eine Mauerdurchführung der eingangs genannten Art so auszubilden, daß sie auch bei Mauern mit inneren Hohlräumen eine sichere Abdichtung ergibt.

Diese Aufgabe wird nach der Erfindung dadurch gelöst, daß die Packung aus einer Reihe von im Durchmesser spreizbaren Packungsringen besteht, die über axiale Kegelflächen mit einem die Selbsthemmung vermeidenden Kegelwinkel gegeneinander abgestützt sind und sich beim Verpressen der Packung an den Kegelflächen axial zusammenschieben und dadurch radial erweitern.

Die aus festem, jedenfalls nicht plastischen Werkstoff, insbesondere aus hartem Kunststoff, wie Polycarbonat, schlagfestem Polystyrol oder dergl., bestehenden Packungsringe können beim Verpressen der Packung nicht wie eine plastische Dichtungsmasse in die Hohlräume der Mauer verdrängt werden, sondern verspannen sich bei ihrer radialen Erweiterung gegen die Wandung des Mauerdurchbruchs und ergeben dadurch immer insgesamt ungeachtet von Mauerhohlräumen einen so festen Sitz des Futterrohres im Mauerdurchbruch, daß der spannmutterseitige Flansch entsprechend fest gegen die Mauer verspannt werden und die sichere Abdichtung bewirken kann, selbst wenn die Packung wegen der Mauerhohlräume nur eine ungenügende oder sogar gar keine Dichtwirkung besitzen sollte.

Eine bevorzugte Ausführungsform ist dadurch gekennzeichnet, daß die Packungsringe je eine Kegelaußenfläche auf der einen Ringseite und eine Kegelinnenfläche auf der anderen Ringseite aufweisen und mit ihrer Kegelaußenfläche in die Kegelinnenfläche des jeweils benachbarten Packungsringes greifen, und daß die Kegelflächen an ihrem im Durchmesser größeren Ende jeweils in einer radial nach außen über die Kegelfläche vorstehenden Ringschulter enden. Die Packungsringe liegen dann normalerweise über ihre Kegelflächen unmittelbar aneinander, wobei die Ringschultern verhindern, daß sich die Packungsringe axial zu weit übereinander schieben, wenn beispielsweise einer der Packungsringe derart in einem Mauerhohlraum liegt, daß er an der Wandung des Mauerdurchbruchs überhaupt nicht zur Anlage kommen kann und sich daher ungehindert aufspreizen könnte. Zweckmäßig sind die Ringschultern benachbarter Packungsringe zum radial formschlüssigen Eingriff aneinander eingerichtet, so daß die Packungsringe an ihren Ringschultern, sollten sie dort aneinander liegen, nicht voneinander abrutschen können. Es ergibt sich dadurch über die gesamte Packungslänge ein im wesentlichen gleicher Außendurchmesser der Packung, wobei allerdings die in Hohlräumen liegenden Packungsringe einen etwas größeren Außendurchmesser annehmen, aber dadurch nur eine zusätzliche axiale Verankerung in der Mauer ergeben können. Das Aufspreizen der Packungsringe wird auf einfachste Weise dadurch ermöglicht, daß die Packungsringe axial geschlitzt sind. Zweckmäßig sind die Schlitze benachbarter Packungsringe in Umfangsrichtung gegeneinander versetzt und/oder verlaufen am Packungsring zur Ringachse geneigt, so daß ein über die ganze Länge der Packung axial durchgehender Schlitz vermieden wird.

Für einen guten Kraftschluß der Packung mit der Wandung im Mauerdurchbruch ist es vorteilhaft, daß die Packungsringe an ihrer äußeren Umfangsfläche eine in Umfangsrichtung verlaufende Oberflächenprofilierung aufweisen, die zweckmäßig als spitzzahnige Rillierung ausgebildet ist.

Eine zum Aufspreizen der Packung besonders bevorzugte Ausführungsform ist dadurchgekennzeichnet, daß der auf der Seite der Spannmutter erste Packungsring eine sich zur Spannmutter hin öffnende Kegelinnenfläche aufweist, in die ein axial gegen die Packung verspannbarer, mit einer entsprechenden Kegelaußenfläche versehener Kragen greift. Um auch hier zu verhindern, daß sich dieser erste Packungsring axial zu weit über den Kragen hinwegschiebt, ist die Kegelaußenfläche des Kragens spannmutterseitig durch eine radial über die Kegelaußenfläche vorstehende Ringschulter abgeschlossen. Im Prinzip kann für den Kragen eine eigene, von der Spannmutter unabhängige Spannvorrichtung vorgesehen sein. Besser und einfacher und daher von der Erfindung bevorzugt ist es aber, daß der Kragen an der Spannmutter abgestützt und als Teil des spannmutterseitigen Flansches ausgebildet ist. Dann empfiehlt es sich, daß der Flansch eine zur Anlage an der Maueraußenseite bestimmte äußere Ringscheibe aufweist, die den Kragen mit Abstand umgibt und mit dem Kragen dichtschließend durch ein Ringteil verbunden ist, daß durch seine Verformung Verstellungen des Kragens und der Ringscheibe gegeneinander ermöglicht. Dies ist mit dem Vorteil verbunden, daß die Ringscheibe auch dann über ihren ganzen Umfang an der Maueraußenseite zur Anlage kommen kann, wenn die Achse des Futterrohres im Mauerdurchbruch nicht senkrecht zur Maueraußenseite verläuft. Zweckmäßig besitzt das Ringteil im Querschnitt ein Rinnenprofil, das eine gute Verformbarkeit ergibt. Im übrigen empfiehlt es sich, das Ringteil, den Kragen und die Ringscheibe einstückig aus Gummi oder einem elastomeren Kunststoff auszubilden. Dann besitzt auch die Ringscheibe in sich ausreichende Verformbarkeit, um sich beispielsweise einer nicht absolut planen Wand überall dichtend anlegen zu können.

Eine weiter bevorzugte Ausführungsform ist dadurch gekennzeichnet, daß zwischen dem Futterrohr und dem im Mauerdurchbruch verschiebbaren Flansch eine Sperreinrichtung vorgesehen ist, die Verschiebungen des Flansches auf dem Futterrohr nur in Richtung zur Packung hin ermöglicht, den Flansch gegen Verschiebung in entgegengesetzter Richtung aber sperrt und daß der Packungsring, dem der Flansch in Richtung seiner Verschiebbarkeit unter der Kraft einer Feder anliegt, am Futterrohr in einem Rastsitz gehalten ist, aus dem sich der Packungsring bei seiner Aufspreizung löst. Wird dann durch geringfügiges Anziehen der Spannmutter der dem Flansch anliegende Packungsring aus dem Rastsitz gelöst, kann die Feder wirksam werden und mit ihrer Kraft die Packung vorspannen, so daß zur endgültigen Verpressung der Packung nur noch wenige Drehungen der Spannmutter nötig sind und sich im übrigen das Futterrohr im Mauerdurchbruch nur entsprechend wenig verschiebt.

Hinsichtlich der Sperreinrichtung empfiehlt es sich, diese so auszubilden, daß der Flansch bezüglich seines Umfangs axial geschlitzt und dadurch im Durchmesser federnd aufspreizbar ist, daß auf dem Futterrohr über den Verschiebungsbereich des Flansches nebeneinander liegende Ringnuten von sägezahnförmigem Profil vorgesehen sind, wobei die steile Zahnbrust des Profils der Spannmutter zugewandt ist, und daß der Flansch an seiner inneren Umfangsfläche wengistens einen in die Ringnuten eingreifenden Ringsteg mit den Ringnuten entsprechendem Sägezahnprofil aufweist.

Um zu erreichen, daß sich der dem Flansch anliegende Packungsring zuerst vor allen anderen Packungsringen spreizt, so daß er sich aus seinem Rastsitz lösen kann, ohne zuvor die Packung mit Hilfe der Spannmutter insgesamt verspannen zu müssen, ist die Anordnung vorzugsweise so gewählt, daß der Packungsring eine zum benachbarten Packungsring hin sich öffnende Kegelinnenfläche und letzterer Packungsring eine darin eingreifende Kegelaußenfläche aufweist, wobei der Kegelwinkel dieser beiden Kegelflächen kleiner als der Kegelwinkel aller anderen Kegelflächen der Packungsringe ist. Daher schieben sich diese beiden Packungsringe zuerst über- und ineinander und spreizen den dem Flansch anliegenden Packungsring auf, ehe sich die anderen Packungsringe an ihren steileren Kegelflächen gegeneinander verschieben können.

Der Rastsitz des dem Flansch anliegenden Packungsringes am Futterrohr kann auf einfachste Weise durch eine Ringnut am Futterrohr und einen Ringsteg am Packungsring oder umgekehrt gebildet sein, die miteinander im Eingriff stehen.

Im folgenden wird die Erfindung an einem in der Zeichnung dargestellten Ausführungsbeispiel näher erläutert; es zeigen:

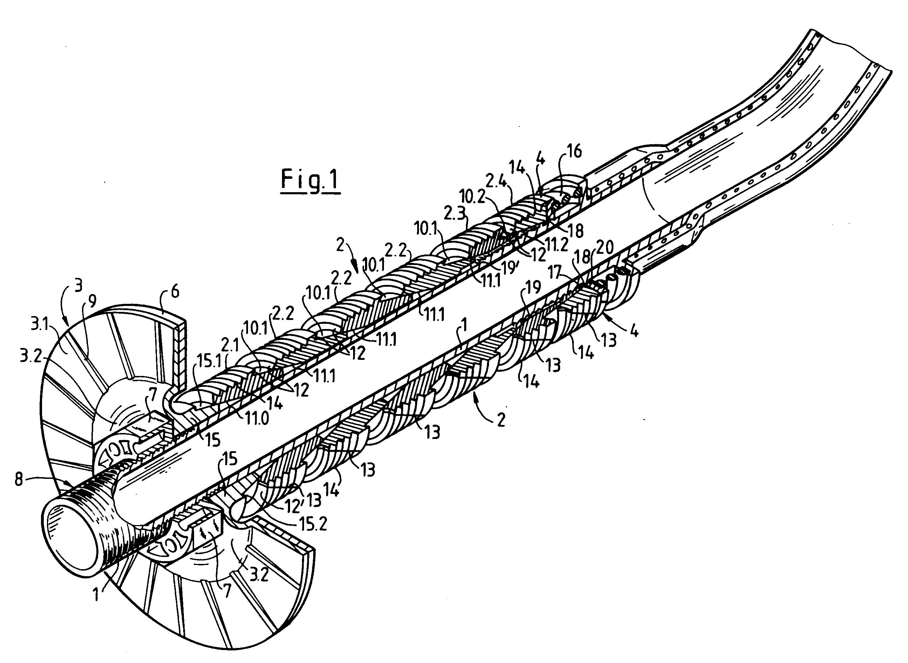

- Fig. 1: eine Durchführung nach der Erfindung in einer Schrägansicht, teils im Schnitt,

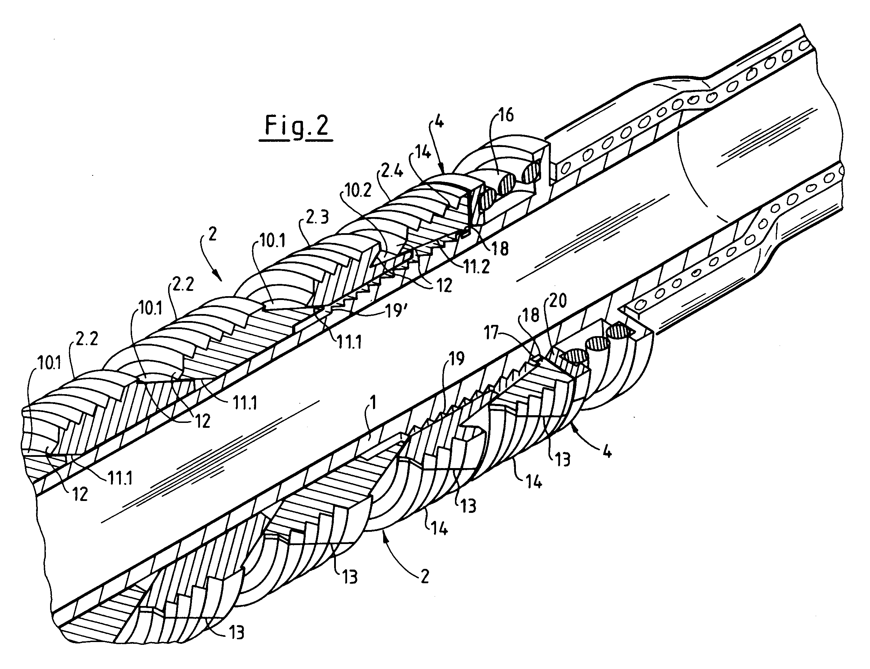

- Fig. 2: die Durchführung nach Fig. 1 in einer vergrößerten Teildarstellung.

Die in der Zeichnung dargestellte Mauerdurchführung für nicht gezeichnete Leitungen, wie Kabel, Rohre oder dergl., besitzt ein Futterrohr 1, das in einen vorzugsweise als Bohrung ausgeführten Mauerdurchbruch einer in der Zeichnung nicht dargestellten Mauer eingesetzt wird. Die Mauerdurchführung besitzt eine den Ringraum zwischen dem Futterrohr 1 und der Wandung des Mauerdurchbruchs ausfüllende Packung 2 und zwei beidseits dieser Packung außen auf dem Futterrohr 1 sitzende Flansche 3, 4. Von diesen beiden Flanschen ist der in der Zeichnung linke Flansch 3 zur Abdichtung gegen die Außenseite der Mauer eingerichtet, wozu er eine den Querschnitt des Mauerdruchbruchs überall radial übergreifende Größe besitzt und auf seiner der Mauer zugewandten Seite mit einer klebenden oder selbstverschweißenden Dichtmasse 6 beschichtet ist, die sich dichtend mit der Oberfläche der Mauer, beispielsweise einem dort vorgesehenen Dichtanstrich oder einer Dichtbahn wasser- und gasdicht verbinden kann. Der Flansch 3 ist auf dem Futterrohr 1 längsverschiebbar angeordnet und an einer Spannmutter 7 axial abgestützt, die in einem auf dem Futterrohr 1 vorgesehenen, vom linken Rohrende ausgehenden Außengewinde 8 verschraubbar ist. Der andere, in der Zeichnung rechte Flansch 4 dient zum axialen Verpressen der Packung 2 innerhalb des Mauerdurchbruchs und ist im Mauerdurchbruch zumindest über einen Teil der Durchbruchslänge verschiebbar, wobei er aber immer gegen den axialen Druck der Packung 2 in noch zu beschreibender Weise am Futterrohr 1 abgestützt ist. Die Packung 2 besteht aus einer Reihe von im Durchmesser spreizbaren Packungsringen 2.1, 2.2, 2.3, 2.4, die über koaxiale Kegelflächen mit einem die Selbsthemmung vermeidenden Kegelwinkel gegeneinander abgestützt sind und sich beim Verpressen der Packung 2 an den Kegelflächen axial zusammenschieben und dabei radial erweitern. Im einzelnen besitzen die Packungsringe je eine Kegelaußenfläche 10.1, 10.2 auf der in der Zeichnung rechten Ringseite und eine Kegelinnenfläche 11.1, 11.2 auf der anderen, in der Zeichnung linken Ringseite. Mit ihrer Kegelaußenfläche 10.1, 10.2 greifen die Packungsringe 2.1,2.2,2.3,2.4 in die Kegelinnenfläche 11.1,11.2 des jeweils benachbarten Packungsringes. Alle Kegelflächen enden im übrigen an ihrem im Durchmesser größeren Ende jeweils in einer radial nach außen über die Kegelfläche vorstehenden Ringschulter 12, an der sie aneinander zur Anlage kommen, wenn sie sich in ihren Kegelflächen vollständig zusammengeschoben haben. Damit sie dabei in den Ringschultern 12 nicht voneinander abrutschen können, sind die Ringschultern benachbarter Packungsringe zum radial formschlüssigen Eingriff aneinander eingerichtet, was im Ausführungsbeispiel dadurch erzielt wird, daß die Ringschulter an der Kegelaußenfläche 10.1,10.2 schwalbenschwanzartig hinterschnitten und die Ringschulter an der Kegelinnenfläche 11.1,11.2 mit einem in die Hinterschneidung greifenden, axial vorstehenden Schwalbenschwanzprofil ausgestattet ist. Die Packungsringe sind axial geschlitzt, um ihr radiales Aufspreizen zu ermöglichen. Dabei sind die Schlitze 13 benachbarter Packungsringe in Umfangsrichtung gegeneinander versetzt. Dies wird im Ausführungsbeispiel dadurch erreicht, daß der Schlitz 13 an jedem Packungsring zur Ringachse geneigt verläuft. Im Ergebnis werden axial über die gesamte Packungslänge durchgehende Schlitze vermieden. Die Packungsringe sind weiter an ihrer äußeren Umfangsfläche mit einer in Umfangsrichtung verlaufenden Oberflächenprofilierung 14 versehen, die im Ausführungsbeispiel als spitzzahnige Rillierung ausgebildet ist. Diese Oberflächenprofilierung 14 sorgt für einen guten Kraftschluß der im Mauerdurchbruch verpreßten Packung 2 mit der Wandung des Mauerdurchbruchs.

Der auf der Seite der Spannmutter 7 erste Packungsring 2.1 besitzt eine sich zur Spannmutter hin öffnende Kegelinnenfläche 11.0, in die ein mit einer entsprechenden Kegelaußenfläche 15.1 versehener Kragen 15 greift, der axial gegen die Packung 2 verspannbar ist. Auch die Kegelaußenfläche 15 dieses Kragens 15 endet spannmutterseitig in einer radial über die Kegelaußenfläche vorstehenden Ringschulter 15.2, die an einer Ringschulter 12′ des Packungsringes 2.1 zur Anlage kommen kann und dann verhindert, daß sich der Kragen 15 und der ihm anliegende erste Packungsring 2.1 zu weit übereinanderschieben können. Der Kragen 15 ist axial an der Spannmutter 7 abgestützt und als Teil des spannmutterseitigen Flansches 3 ausgebildet. Der Flansch 3 besitzt eine zur Anlage an der Maueraußenseite bestimmte äußere Ringscheibe 3.1, die den Kragen 15 mit Abstand umgibt, und ist mit dem Kragen 15 dichtschließend durch ein Ringteil 3.2 verbunden, das durch eigene Verformung Verstellungen des Kragens 15 und der Ringscheibe 3.1 gegeneinander ermöglicht, so daß sich die Ringscheibe 3.1 auch dann über ihren ganzen Umfang der Wandaußenseite anlegen kann, wenn die Achse des Futterrohrs 1 nicht senkrecht zur Wandaußenseite stehen sollte. Das Ringteil 3.2 ist im Querschnitt als Rinnenprofil ausgebildet und mit dem Kragen 15 und der Ringscheibe 3.1 einstückig aus Gummi oder einem anderen geeigneten elastomeren Kunststoff hergestellt. Diese Werkstoffwahl ermöglicht es auch der Ringscheibe, sich beispielsweise einer nicht absolut planen Wandaußenseite über den gesamten Umfang dichtend anzulegen. Um die Steifigkeit der Ringscheibe 3.1 gegenüber dem Ringteil 3.2 zu erhöhen, ist die Ringscheibe mit radial verlaufenden Versteifungsrippen 9 versehen. Wird der Kragen 15 gegen die Packung 8 gedrückt, erfährt er in der Kegelinnenfläche 11.0 des Packungsringes 2.1 eine radial einwärts gerichtete Verspannung gegen das Futterrohr 1, wodurch sich der Dichtschluß zwischen dem Flansch 3 und dem Futterrohr 1 ergibt.

Zwischen dem Futterrohr 1 und dem im Mauerdurchbruch verschiebbaren Flansch 4 ist eine Sperreinrichtung vorgesehen, die Verschiebungen des Flansches 4 auf dem Futterrohr 1 nur in Richtung zur Packung 2 hin ermöglicht, den Flansch 4 gegen Verschiebungen in entgegengesetzter Richtung aber sperrt. Der Flansch 4 liegt in Richtung seiner Verschiebbarkeit unter der Kraft einer Feder 16 am Packungsring 2.4 an, der am Futterrohr 1 in einem Rastsitz gehalten ist, aus dem sich der Packungsring 2.4 nur bei seiner Aufspreizung löst. Dieser Rastsitz ist durch eine Ringnut 17 am Futterrohr 1 und einen Ringsteg 18 am Packungsring 2.4 gebildet. Der Ringsteg 18 steht im Eingriff in der Ringnut 17, tritt aber aus der Ringnut 17 beim Aufspreizen des Packungsrings 2.4 aus, so daß sich der Packungsring 2.4 zur Packung 2 hin verschieben läßt. Der Flansch 4 ist bezüglich seines Umfangs axial geschlitzt und läßt sich dadurch im Durchmesser federnd aufspreizen. Auf dem Futterrohr 1 sind über den Verschiebungsbereich des Flansches 4 nebeneinander liegende Ringnuten 19 vorgesehen, die sägezahnförmiges Profil besitzen, wobei die steile, in einer zur Futterrohrachse senkrechten Ebene liegende Zahnbrust 19′ des Profils der Packung 2 und der Spannmutter 7 zugewandt ist. Der Flansch 4 besitzt an seiner inneren Umfangsfläche einen in die Ringnut 19 eingreifenden Ringsteg 20 mit den Ringnuten 19 entsprechendem Sägezahnprofil. Im Ergebnis kann der Flansch 4 in der Zeichnung nach links verschoben werden, wobei er sich über die geneigten Zahnflanken jeweils aufspreizt, bis er über die Zahnbrust 19′ in die nächste Ringnut 19 einspringt. Ein entsprechendes Bewegen des Flansches 4 in entgegengesetzter Richtung, in der Zeichnung also nach rechts, verhindert dagegen die steile Zahnbrust 19′. Um den Packungsring 2.4 aufspreizen und damit aus seinem Rastsitz lösen zu können, ist er mit einer zum benachbarten Packungsring 2.3 hin sich öffnenden Kegelinnenfläche 11.2 versehen, während dieser benachbarte Packungsring 2.3 eine darin eingreifende Kegelaußenfläche 10.2 aufweist. Beide Kegelflächen 10.2,11.2 besitzen einen Kegelwinkel, der nur etwa die Hälfte des Kegelwinkels aller anderen Kegelflächen 10.1,11.1,11.0,15.1 der Packungsringe 2.1,2.2 beträgt. Wird daher, ausgehend vom unverspannten Zustand der Packung 2, die Spannmutter 7 etwas angezogen, so wird diese Axialverstellung über den Kragen 15 und alle anderen Packungsringe 2.1,2.2 auf den vorletzten Packungsring 2. übertragen, ohne daß sich die zwischen dem Kragen 15 und diesem vorletzten Packungsring 2.3 befindenden Packunsringe 2.2 axial ineinander schieben und aufspreizen, während sich wegen des flacheren Kegelwinkels der vorletzte Packungsring 2.3 in den letzten Packungsring 2.4 hineinschiebt und ihn dadurch aufspreizt. Dieser löst sich somit aus seinem Rastsitz, so daß er der gespannten Feder 16 nicht mehr das Gleichgewicht halten kann. Die Feder 16 dehnt sich daher aus und verschiebt den Flansch 4 über die Rignuten 19, wodurch die Packungsringe 2.1,2.2,2.3 ineinander geschoben und bis zur Anlage an der Wandung des Mauerdurchbruchs aufgespreizt werden. Wird nun die Spannmutter 7 weiter angezogen, werden die Packungsringe endgültig gegeneinander und gegen die Wandung des Mauerdurchbruchs verpreßt, wobei der in einer der Ringnuten 19 sitzende und in der Zahnbrust 19′ axial abgestützte Flansch der Spannkraft der Spannmutter 7 das Gleichgewicht hält. Gleichzeitig wird bei dieser Verspannung die Ringscheibe 3.1 dichtschließend gegen die Maueraußenseite gepreßt, wobei das Ringteil 3.2 des Flansches 3 durch seine Verformung Lageverstellungen der Ringscheibe 3.1 gegenüber dem Kragen 15 ausgleichen kann.

## Patentansprüche

1. Mauerdurchführung für Leitungen, wie Kabel, Rohre oder dergl., zum Einsetzen in einen in der Mauer insbesondere als Bohrung geschaffenen Mauerdurchbruch, mit einem den Mauerdurchbruch durchgreifenden Futterrohr (1), einer Packung (2) zum Ausfüllen des Ringraumes zwischen dem Futterrohr (1) und der Wandung des Mauerdurchbruchs und mit zwei außen auf dem Futterrohr (1) sitzenden Flanschen (3, 4), von denen der zur Abdichtung gegen die Außenseite der Mauer eingerichtete eine Flansch (3) eine den Querschnitt des Mauerdurchbruchs überall radial übergreifende Größe besitzt und auf dem Futterrohr (1) längsverschiebbar angeordnet und an einer Spannmutter (7) abgestützt ist, die in einem auf dem Futterrohr (1) vorgesehenen, vom Rohrende ausgehenden Außengewinde (8) verschraubbar ist, und der andere Flansch (4) zum axialen Verpressen der Packung (2) innerhalb des Mauerdurchbruchs zumindest über einen Teil der Durchbruchslänge verschiebbar und gegen den axialen Druck der Packung (2) am Futterrohr (1) abgestützt ist, dadurch gekennzeichnet, daß die Packung (2) aus einer Reihe von im Durchmesser spreizbaren Packungsringen (2.1, 2.2, 2.3,2.4) besteht, die über koaxiale Kegelflächen (10.1, 11.1, 10.2, 11.2) mit einem die Selbsthemmung vermeidenden Kegelwinkel gegeneinander abgestützt sind und sich beim Verpressen der Packung (2) an den Kegelflächen axial zusammenschieben und radial erweitern.

2. Mauerdurchführung nach Anspruch 1, dadurch gekennzeichnet, daß die Packungsringe je eine Kegelaußenfläche (10.1, 10.2) auf der einen Ringseite und eine Kegelinnenfläche (11.1,11.2) auf der anderen Ringseite aufweisen und mit ihrer Kegelaußenfläche (10.1,10.2) in die Kegelinnenfläche (11.1,11.2) des jeweils benachbarten Packungsringes greifen, und daß die Kegelflächen an ihrem im Durchmesser größeren Ende jeweils in einer radial nach außen über die Kegelfläche vorstehenden Ringschulter (12) enden.

3. Mauerdurchführung nach Anspruch 2, dadurch gekennzeichnet, daß die Ringschultern (12) benachbarter Packungsringe zum radial formschlüssigen Eingriff aneinander eingerichtet sind.

4. Mauerdurchführung nach einem der Ansprüche 1 bis 3, dadurch gekennzeichnet, daß die Pakungsringe (2.1,2.2,2.3,2.4) axial geschlitzt sind.

5. Mauerdurchführung nach Anspruch 4, dadurch gekennzeichnet, daß die Schlitze (13) benachbarter Packungsringe in Umfangsrichtung gegeneinander versetzt sind.

6. Mauerdurchführung nach Anspruch 4 oder 5, dadurch gekennzeichnet, daß der Schlitz (13) am Packungsring zur Ringachse geneigt verläuft.

7. Mauerdurchführung nach eiem der Ansprüche 1 bis 6, dadurch gekennzeichnet, daß die Packungsringe (2.1,2.2,2.3,2.4) an ihrer äußeren Umfangsfläche eine in Umfangsrichtung verlaufende Oberflächenprofilierung (14) aufweisen.

8. Mauerdurchführung nach Anspruch 7, dadurch gekennzeichnet, daß die Oberflächenprofilierung (14) als spitzzahnige Rillierung ausgebildet ist.

9. Mauerdurchführung nach einem der Ansprüche 1 bis 8, dadurch gekennzeichnet, daß der auf der Seite der Spannmutter (7) erste Packungsring (2.1) eine sich zur Spannmutter hin öffnende Kegelinnenfläche (11.0) aufweist, in die ein axial gegen die Packung (2) verspannbarer, mit einer entsprechenden Kegelaußenfläche (15.1) versehener Kragen (15) greift.

10. Mauerdurchführung nach Anspruch 9, dadurch gekennzeichnet, daß die Kegelaußenfläche (15.1) des Kragens (15) spannmutterseitig durch eine radial über die Kegelaußenfläche vorstehende Ringschulter (15.2) abgeschlossen ist.

11. Mauerdurchführung nach Anspruch 9 oder 10, dadurch gekennzeichnet, daß der Kragen (15) an der Spannmutter (7) abgestützt und als Teil des spannmutterseitigen Flansches (3) ausgebildet ist.

12. Mauerdurchführung nach Anspruch 11, dadurch gekennzeichnet, daß der Flansch (3) eine zur Anlage an der Maueraußenseite bestimmte äußere Ringscheibe (3.1) aufweist, die den Kragen (15) mit Abstand umgibt und mit dem Kragen (15) dichtschließend durch ein Ringteil (3.2) verbunden ist, das durch eigene Verformung Verstellungen des Kragens (15) und der Ringscheibe (3.1) gegeneinander ermöglicht.

13. Mauerdurchführung nach Anspruch 12, dadurch gekennzeichnet, daß das Ringteil (3.2) im Querschnitt ein Rinnenprofil aufweist.

14. Mauerdurchführung nach Anspruch 12 oder 13, dadurch gekennzeichnet, daß das Ringteil (3.2), der Kragen (15) und die Ringscheibe (3.1) einstückig aus Gummi oder einem elastomeren Kunststoff ausgebildet sind.

15. Mauerdurchführung nach einem der Ansprüche 1 bis 14, dadurch gekennzeichnet, daß zwischen dem Futterrohr (1) und dem im Mauerdurchbruch verschiebbaren Flansch (4) eine Sperreinrichtung vorgesehen ist, die Verschiebungen des Flansches (4) auf dem Futterrohr (1) nur in Richtung zur Packung (2) hin ermöglicht, den Flansch (4) gegen Verschiebung in entgegengesetzter Richtung aber sperrt, und daß der Packungsring (2.4), dem der Flansch (4) in Richtung seiner Verschiebbarkeit unter der Kraft einer Feder (16) anliegt, am Futterrohr (1) in einem Rastsitz gehalten ist, aus dem er sich nur bei seiner Aufspreizung löst.

16. Mauerdurchführung nach Anspruch 15, dadurch gekennzeichnet, daß der Flansch (4) bezüglich seines Umfangs axial geschlitzt und dadurch im Durchmesser federnd aufspreizbar ist, daß auf dem Futterrohr (1) über den Verschiebungsbereich des Flansches (4) nebeneinander liegende Ringnuten (19) von sägezahnförmigem Profil vorgesehen sind, wobei die steile Zahnbrust (19.1) des Profils der Spannmutter (7) zugewandt ist, und daß der Flansch (4) an seiner inneren Umfangsfläche wengistens einen in die Ringnuten (19) eingreifenden Ringsteg (20) mit den Ringnuten (19) entsprechendem Sägezahnprofil aufweist.

17. Mauerdurchführung nach Anspruch 15 oder 16, dadurch gekennzeichnet, daß der Packungsring (2.4) eine zum benachbarten Packungsring (2.3) hin sich öffnende Kegelinnenfläche (11.2) und letzterer Packungsring (2.3) eine darin eingreifende Kegelaußenfläche (10.2) aufweist, wobei der Kegelwinkel dieser beiden Kegelflächen (10.2,11.2) kleiner als der Kegelwinkel aller anderen Kegelflächen (10.1,11.1,15.1,11.0) der Packungsringe ist.

18. Mauerdurchführung nach einem der Anprüche 15 bis 17, dadurch gekennzeichnet, daß der Rastsitz des dem Flansch (4) anliegenden Packungsringes (2.4) am Futterrohr (1) durch eine Ringnut (17) am Futterrohr (1) und einen Ringsteg (18) am Packungsring (2.4) oder umgekehrt gebildet ist, die miteinander im Eingriff stehen.

## Claims

1. A wall duct arrangement for conduits such as cables, pipes or the like, for fitting into a wall opening provided in the wall, in particular in the form of a bore, comprising a lining tube (1) which passes through the wall opening, a packing (2) for filling the annular space between the lining tube (1) and the surface of the wall opening, and two flanges (3, 4) which are externally carried on the lining tube (1) and of which the one flange (3), which is arranged to seal against the outside of the wall, is of a size that extends radially everywhere beyond the cross-section of the wall opening, and is arranged longitudinally displaceably on the lining tube (1) and is supported against a clamping nut (7) which can be screwed on an external screwthread (8) which is provided on the lining tube (1) and which starts from the tube end, while the other flange (4) is displaceable for axially applying pressure to the packing (2) within the wall opening at least over a portion of the length of the opening and is supported against the axial pressure of the packing (2) on the lining tube (1), characterised in that the packing (2) comprises a row of packing rings (2.1, 2.2, 2.3, 2.4) which are spreadable in respect of diameter and which are supported against each other by way of coaxial conical surfaces (10.1, 11.1, 10.2, 11.2) with a cone angle that avoids a self-locking effect, and which are axially pushed together and radially expanded at the conical surfaces when pressure is applied to the packing (2).

2. A wall duct arrangement according to claim 1 characterised in that the packing rings each have a respective outer conical surface (10.1, 10.2) on the one side of the ring and an inner conical surface (11.1, 11.2) on the other side of the ring and engage with their outer conical surface (10.1, 10.2) into the inner conical surface (11.1, 11.2) of the respectively adjacent packing ring, and that the conical surfaces each terminate at their larger-diameter end in an annular shoulder (12) which projects radially outwardly beyond the conical surface.

3. A wall duct arrangement according to claim 2 characterised in that the annular shoulders (12) of adjacent packing rings are adapted for radially positive engagement against each other.

4. A wall duct arrangement according to one of claims 1 to 3 characterised in that the packing rings (2.1, 2.2, 2.3, 2.4) are axially slit.

5. A wall duct arrangement according to claim 4 characterised in that the slits (13) of adjacent packing rings are displaced relative to each other in the peripheral direction.

6. A wall duct arrangement according to claim 4 or claim 5 characterised in that the slit (13) on the packing ring extends inclinedly relative to the ring axis.

7. A wall duct arrangement according to one of claims 1 to 6 characterised in that the packing rings (2.1, 2.2, 2.3, 2.4) have at their outer peripheral surface a surface profiling (14) which extends in the peripheral direction.

8. A wall duct arrangement according to claim 7 characterised in that the surface profiling (14) is in the form of sharp-toothed grooving.

9. A wall duct arrangement according to one of claims 1 to 8 characterised in that the packing ring (2.1) which is first on the side of the clamping nut (7) has an inner conical surface (11.0) which opens towards the clamping nut and into which engages a collar (15) which can be axially braced against the packing (2) and which is provided with a corresponding outer conical surface (15.1).

10. A wall duct arrangement according to claim 9 characterised in that the outer conical surface (15.1) of the collar (15) is terminated at the clamping nut side by an annular shoulder (15.2) which projects radially beyond the outer conical surface.

11. A wall duct arrangement according to claim 9 or claim 10 characterised in that the collar (15) is supported against the clamping nut (7) and is in the form of part of the flange (3) at the clamping nut side.

12. A wall duct arrangement according to claim 11 characterised in that the flange (3) has an outer annular disc (3.1) which is intended to bear against the outside of the wall and which surrounds the collar (15) at a spacing and which is sealingly connected to the collar (15) by a ring portion (3.2) which by its own deformation permits displacement of the collar (15) and the annular disc (3.1) relative to each other.

13. A wall duct arrangement according to claim 12 characterised in that the ring portion (3.2) has a channel profile in cross-section.

14. A wall duct arrangement according to claim 12 or claim 13 characterised in that the ring portion (3.2), the collar (15) and the annular disc (3.1) are integrally made from rubber or an elastomeric plastics material.

15. A wall duct arrangement according to one of claims 1 to 14 characterised in that provided between the lining tube (1) and the flange (4) which is displaceable in the wall opening is a locking means which permits displacement of the flange (4) on the lining tube (1) only in a direction towards the packing (2) but locks the flange (4) to prevent displacement in the opposite direction, and that the packing ring (2.4) against which the flange (4) bears in the direction of its displaceability under the force of a spring (16) is held on the lining tube (1) in a retaining seat from which it is released only upon spreading thereof.

16. A wall duct arrangement according to claim 15 characterised in that the flange (4) is axially slit in respect of its periphery and thereby can be resiliently spread open in respect of its diameter, that juxtaposed annular grooves (19) of sawtooth-shaped profile are provided on the lining tube (1) over the region of displacement of the flange (4), the steep tooth face (19.1) of the profile being towards the clamping nut (7), and that at its inner peripheral surface the flange (4) has at least one annular limb portion (20) which engages into the annular grooves (19) and which has a sawtooth profile corresponding to the annular grooves (19).

17. A wall duct arrangement according to claim 15 or claim 16 characterised in that the packing ring (2.4) has an inner conical surface (11.2) which opens towards the adjacent packing ring (2.3) and the latter packing ring (2.3) has an outer conical surface (10.2) which engages therein, wherein the cone angle of those two conical surfaces (10.2, 11.2) is smaller than the cone angle of all other conical surfaces (10.1, 11.1, 15.1, 11.0) of the packing rings.

18. A wall duct arrangement according to one of claims 15 to 17 characterised in that the retaining seat of the packing ring (2.4) which bears against the flange (4), on the lining tube (1), is formed by an annular groove (17) on the lining tube (1) and an annular limb portion (18) on the packing ring (2.4) or vice-versa, which are in engagement with each other.

## Revendications

1. Traversée de mur pour des conduits tels que des câbles, des tubes ou analogues, destinés à être insérée dans une ouverture ménagée dans le mur, notamment sous la forme d'un perçage, et comportant un manchon de protection (1), qui traverse une ouverture ménagée dans le mur, une garniture de remplissage (2) servant à remplir l'espace annulaire entre le tube de protection (1) et la paroi de l'ouverture ménagée dans le mur et deux brides (3,4), qui prennent appui extérieurement sur le manchon de protection (1) et parmi lesquelles une bride (3), qui sert à établir l'étanchéité vis-à-vis de la face extérieure du mur, possède une taille qui dépasse radialement de tous côtés la section transversale de l'ouverture ménagée dans le mur et est disposée d'une manière à être déplaçable longitudinalement sur le manchon de protection (1) et prend appui contre un écrou de serrage (7), qui peut être vissé sur le filetage extérieur (8) qui est prévu sur le manchon de protection (1) et sort de l'extrémité du manchon, tandis que l'autre bride (4) est déplaçable au moins sur une partie de la longueur de l'ouverture ménagée dans le mur pour comprimer axialement la garniture de remplissage (2) à l'intérieur de ce passage et prend appui, à l'encontre de la pression axiale de la garniture de remplissage (2) sur le manchon de protection (1), caractérisée en ce que la garniture de remplissage (2) est constituée par une série de bagues (2.1, 2.2, 2.3, 2.4), qui peuvent être dilatées diamétralement, et qui prennent appui les unes sur les autres par l'intermédiaire de surfaces coaxiales coniques (10.1, 10.2, 11.1, 11.2) possédant un angle évitant l'autoblocage et sont comprimées axialement et s'élargissent radialement lors du serrage de la garniture de remplissage (2) contre les surfaces coniques.

2. Traversée de mur selon la revendication 1, caractérisée en ce que les bagues de la garniture de remplissage possèdent respectivement une surface extérieure conique (10.1, 10.2) sur un côté de l'anneau et une surface intérieure conique (11.1, 11.2), et s'engagent, par leur surface extérieure conique (10.1,10.2) dans la surface intérieure conique (11.1, 11.2) de la bague, respectivement voisine, de la garniture de remplissage et que les surfaces coniques se terminent, au niveau de leur extrémité de diamètre accru, respectivement par un épaulement annulaire (12) qui fait saillie radialement vers l'extérieur au-delà de la surface conique.

3. Traversée de mur selon la revendication 2, caractérisée en ce que les épaulements annulaires (12) de bagues voisines de la garniture de remplissage sont agencés de manière à s'interpénétrer radialement selon une liaison par formes complémentaires.

4. Traversée de mur selon l'une des revendications 1 à 3, caractérisée en ce que les bagues (2.1, 2.2, 2.3, 2.4) de la garniture de remplissage sont fendues axialement.

5. Traversée de mur selon la revendication 4, caractérisée en ce que les fentes (13) de bagues voisines de la garniture de remplissage sont décalées les unes par rapport aux autres dans la direction circonférentielle.

6. Traversée de mur selon la revendication 4 ou 5, caractérisée en ce que la fente (13) de la bague de la garniture de remplissage est disposée obliquement par rapport à l'axe de la bague.

7. Traversée de mur selon l'une des revendications 1 à 6, caractérisée en ce que les bagues (2.1, 2.2, 2.3, 2.4) de la garniture de remplissage possèdent, sur leur surface circonférentielle extérieure, un profil superficiel (14) qui s'étend dans la direction circonférentielle.

8. Traversée de mur selon la revendication 7, caractérisée en ce que le profil superficiel (14) est réalisé sous la forme d'un rainurage à sommets pointus.

9. Traversée de mur selon l'une des revendications 1 à 8, caractérisée en ce que la première bague (2.1) de la garniture de remplissage du côté de l'écrou de serrage (7) possède une surface intérieure conique (11.0), qui s'ouvre en direction de l'écrou de serrage et dans laquelle s'engage un collet (15) qui peut être serré axialement contre la garniture de remplissage (2) et possède une surface extérieure conique correspondante (15.1).

10. Traversée de mur selon la revendication 9, caractérisée en ce que la surface extérieure conique (15.1) du collet (15) se termine, du côté de l'écrou de serrage, par un épaulement annulaire (15.2) qui fait saillie radialement au-delà de la surface extérieure conique.

11. Traversée de mur selon la revendication 9 ou 10, caractérisée en ce que le collet (15) prend appui sur l'écrou de serrage (7) et est agencé sous la forme d'une partie de la bride (3) située du côté du côté de l'écrou de serrage.

12. Traversée de mur selon la revendication 11, caractérisée en ce que la bride (3) possède un disque annulaire extérieur (3.1), qui est destiné à s'appliquer contre une face extérieure du mur, entoure à distance le collet (15) et est raccordé au collet (15) d'une manière étanche, par une partie annulaire (3.2), qui permet, grâce à sa déformation propre, un déplacement réciproque du collet (15) et du disque annulaire (3.1).

13. Traversée de mur selon la revendication 12, caractérisée en ce que la partie annulaire (3.2) possède en coupe transversale un profil de rainure.

14. Traversée de mur selon la revendication 12 ou 13, caractérisée en ce que la partie annulaire (3.2), le collet (15) et le disque annulaire (3.1) sont réalisés d'un seul tenant en caoutchouc ou en une matière plastique élastomère.

15. Traversée de mur selon l'une des revendications 1 à 14, caractérisée en ce qu'entre le manchon de protection (1) et la bride (4) déplaçable dans la traversée de mur, il est prévu un dispositif de blocage qui permet des déplacements de la bride (4) sur le manchon de protection (1) uniquement en direction de la garniture de remplissage (2), mais bloque la bride (4) contre tout déplacement dans la direction opposée, et que la bague (2.4) de la garniture de remplissage, sur laquelle la bride (4) s'applique, dans la direction de sa possibilité de déplacement, sous l'action de la force d'un ressort (16), est maintenue sur le manchon de protection (1) dans un état encliqueté, dont elle se dégage uniquement lors de son écartement.

16. Traversée de mur selon la revendication 15, caractérisée en ce que la bride (4) est fendue axialement au niveau de son pourtour et que de ce fait elle peut être écartée élastiquement diamétralement, qu'il est prévu dans le manchon de protection (1) des gorges annulaires (19) qui sont juxtaposées sur la zone de déplacement de la bride (4) et possèdent un profil en dents de scie, que la face d'attaque pentue (19.1) du profil est tournée vers l'écrou de serrage (7), et que la bride (4) possède, au niveau de sa surface circonférentielle intérieure, au moins une barrette annulaire (20) qui s'engage dans les gorges annulaires (19) et possède le profil en dents de scie qui correspond aux gorges annulaires (19).

17. Traversée de mur selon la revendication 15 ou 16, caractérisée en ce que la bague formant garniture de remplissage (2.4) possède une surface intérieure conique (11.2) qui s'ouvre en direction de la bague formant garniture de remplissage voisine (2.2) et que la dernière bague formant garniture de remplissage (2.3) possède une surface extérieure conique (10.2) qui s'engage dans la surface intérieure conique, l'angle au sommet de ces deux surfaces coniques (10.2, 11.2) étant inférieur à l'angle au sommet de toutes les surfaces coniques (10.1, 11.1, 15.1, 11.0) des bagues formant garniture de remplissage.

18. Traversée de mur selon l'une des revendications 15 à 17, caractérisée en ce que l'état encliqueté de la bague formant garniture de remplissage (2.4) appliquée contre la bride (4) sur le manchon de protection (1) est formée par une gorge annulaire (17) ménagée dans le manchon de protection (1) et une barrette annulaire (18) formée sur la bague (2.4) de la garniture de remplissage ou inversement, cette gorge annulaire et cette barrette annulaire engrenant réciproquement.
